Europäisches Patentamt

**(19)** **European Patent Office**

**Office européen des brevets**

(11) Publication number: **0 168 355**
**A1**

(12) # EUROPEAN PATENT APPLICATION

(21) Application number: **85830136.9**

(22) Date of filing: **05.06.85**

(51) Int. Cl.⁴: **F 16 B 19/10**

(30) Priority: **21.06.84 IT 2153884**

(43) Date of publication of application:
**15.01.86 Bulletin 86/3**

(84) Designated Contracting States:
**AT BE CH DE FR GB LI NL SE**

(71) Applicant: **TAC RIVETING SYSTEM di Oggionni Pier
Giorgio & C. s.a.s.
3, Via Thaon di Revel
Milano(IT)**

(72) Inventor: **Oggionni, Pier Giorgio
Via Thaon di Revel, 3
I-20159 Milano(IT)**

(74) Representative: **Cicogna, Franco
Ufficio Internazionale Brevetti Dott.Prof. Franco Cicogna
Via Visconti di Modrone, 14/A
I-20122 Milano(IT)**

(54) **A snap-shank blind rivet.**

(57) A snap-shank blind rivet has a tubular body (1) within
which is a shank (2) having a head (6) which presses the
tubular body (1) to deform it when a tension is applied to the
shank (2), the tubular body (1) having a plurality of circum-
ferential grooves or discontinuous recesses (4) constituting
weakened portions of the tubular body at which successive
circumferential and parallel expansion folds are formed as
the tubular body (1) deforms under the force exerted by the
rivetting machine so that rivets of a single length can be
made for joining workpieces having widely different overall
thicknesses at least within predetermined limits.

Fig. 1

Croydon Printing Company Ltd.

"A snap-shank blind rivet"

The present invention relates to a snap-shank blind rivet having a tubular body which can be compressed by a tension applied to the shank, to form one or more circumferential swellings to retain the rivet in place in workpieces to be joined.

When it is required to join workpieces, particularly panels, the rear part of which is not accessible, a special type of rivet called a blind rivet is used. Such rivets have a tubular body which can be compressed longitudinally and expanded laterally by applying a tension to a shank which is transferred through the body of the rivet itself to effect such compression.

It is likewise known that currently available blind rivets, also known as "pop" rivets, are made in a range of different lengths each selected for use in dependence on the overall thickness of the workpieces to be joined. If the part of the tubular rivet body which projects through to the back of the workpiece is too long, instead of being properly fixed upon the application of a tension to the shank, such as by means of a normal riveting machine a more general deformation takes place and it is not able to form an effective clamping rivet head. This makes it necessary to hold in store a multiplicity of rivets of different length, each usable solely for the fixing of workpieces having an overall thickness within a well defined and rather narrow range.

The present invention seeks to overcome this disadvantage by providing a snap-shank blind rivet which is usable for fixing workpieces having thicknesses within a much wider range than was hithertofore possible. The present invention also seeks to provide a snap-shank blind rivet which can be fixed with a conventional riveting machine.

According to the present invention, there is provided a snap-shank blind rivet having a tubular body on a shank with an enlarged head at one end thereof, characterised by the fact that the tubular body is provided with longitudinally spaced continuous or discontinuous circumferentially extending grooves or recesses forming zones of weakening such that under the action of a conventional riveting machine on the shank predetermined portions of the tubular body are caused to deform.

One advantage of the present invention is that embodiments thereof can be formed which can guarantee an adequate impermeability of the fixed assembly.

A feature of the invention is that the tubular body of the rivet has zones of weakening such that the part of the rivet which projects through the workpieces to be joined by rivetting is caused to swell close to the workpiece by the tension applied to the shank by a conventional riveting machine in such a way as to form a firm and solid head for retaining the assembled pieces. If two or more of the zones of weakening are projecting then the head expands successively at each zone particularly if the grooves nearer the workpiece are deeper.

Various embodiments of the present invention will now be more particularly described, by way of example, with reference to the accompanying drawings, in which:

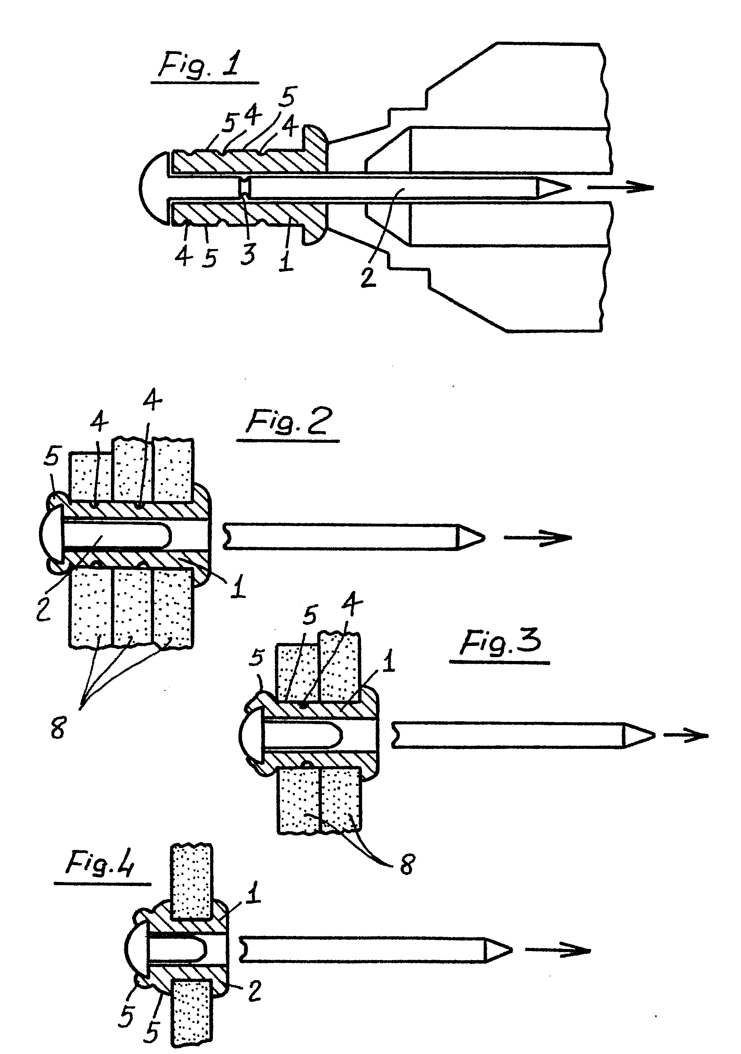

Figure 1 is an axial section of a blind rivet formed as a first embodiment of the present invention, with its shank inserted into a riveting machine;

Figures 2, 3 and 4 are schematic axial sections showing the behaviour of the rivet of Figure 1 in fixings of three different thicknesses;

Figure 5 illustrates, in section and on an enlarged scale, the head of a rivet constituting a second embodiment of the invention, shown attached to the end of the shank;

Figure 6 is a side view of a rivet constituting a third embodiment of the invention, differing from the first in that on its tubular body there are formed grooves with different depths; and

- 4 -

Figure 7 illustrates a fourth embodiment of the invention which is formed in such a way as to allow the fixation of a hollow element to a panel or other structure.

With particular reference now to the accompanying drawings, the snap-shank blind rivet constituting the subject of the invention essentially comprises a tubular body 1, fitted over a shank 2 provided with a cirumferential groove 3 preferably of V-Shape, which weakens the shank at a predetermined point along its length so that it will snap at this point when a tension above a predetermined threshold is applied thereto.

In accordance with the invention the tubular body 1 has circumferential grooves 4 formed, for example, by means of roll forming, and suitably spaced along the length of the body 1. These grooves delimit portions 5 of the tubular body in correspondence with which, in use of the rivet there are formed outward expansion folds, which are caused by the tension exerted via the shank in a known way by the riveting tool and which serve for the connection of work pieces to be joined and through preliminarily formed holes in which the body of the rivet is inserted prior to application of the rivet setting tension.

By means of this constructional arrangement therefore, one or more expansions fold in the wall of the tubular body can be obtained in dependence on the thickness of the workpieces to be connected. Consequently, with a rivet of a given length, it is possible to join together workpieces the overall thickness of which may fall within a wide range, obviously providing the thickness is less than the length of the rivet body itself.

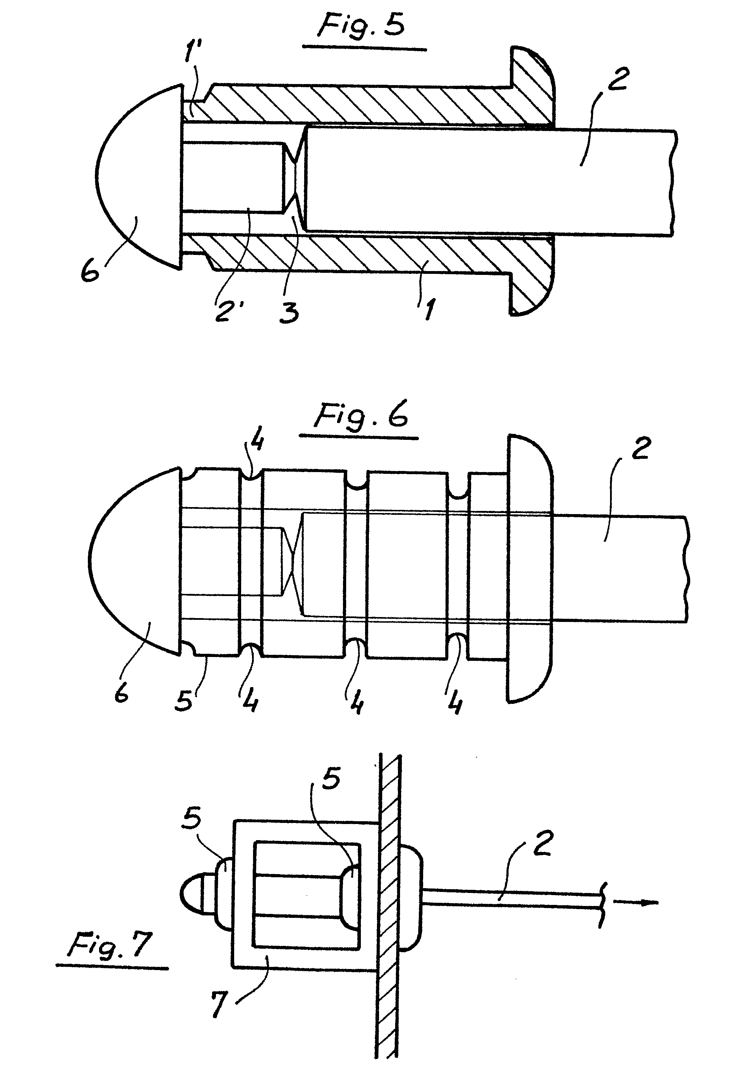

In the embodiment of Figure 6 the grooves 4 formed on the tubular body 1 have a different depth, the groove which is nearest the rivet flange being deepest. In this way, it is possible to pre-arrange the sequence of formation of the folds on the tubular body itself, with the possibility of also riveting hollow workpieces 7 as shown in Figure 7.

In the embodiment of Figure 5 the end portion 2' of the shank 2 carrying the head 6 also has a smaller cross section than that of the main part of the shank itself, and the corresponding end portion 1' of the tubular body is also of reduced section (Figure 5). Because of this arrangement the end portion 1' of the tubular body in contact with the head of the shank will tend to bend inwards, upon the application of a tension to the shank 1, thereby being pressed onto the reduced section portion 2' of the shank, thereby making a connection between the components with an effectively impermeable seal. Moreover, in such an embodiment, this form of the shank ensure that, during the fixing of the rivet the head of the shank does not become loose from the tubular body 1, but is held tightly to it by the end part of the tubular body which is compressed hard against the part 2' as well as to the sides of the workpieces 8 which it is desired to fix, forming an effectively solid rivet head able to guarantee a high clamping of the workpieces themselves.

It is suitable, likewise, to underline that the said grooves or circumferential recesses 4 are formed on the tubular body 1 preferably at a spacing equal to the diameter of the tubular body itself.

Claims:

1.  A snap-shank blind rivet having a tubular body (1) on a shank (2) with an enlarged head (6) at one end thereof, characterised by the fact that the tubular body (1) is provided with longitudinally spaced continuous or discontinuous circumferentially extending grooves or recesses (4) forming zones of weakening such that under the action of a conventional riveting machine on the shank (2) predetermined portions of the tubular body are caused to deform.

2.  A snap-shank blind rivet according to Claim 1, characterised by the fact that the said circumferential grooves or recesses (4) are formed by means of roll forming and are spaced by intervals substantially equal to the diameter of the tubular body (1) of the rivet itself.

3.  A snap-shank blind rivet according to Claim 1 or Claim 2, characterised by the fact that at least one of the said circumferential grooves or recesses (4) formed on the tubular body (1) has a different depth from the other or others.

4.  A snap-shank blind rivet according to any preceding Claim, characterised by the fact that the said shank (2) has a circumferential incision (3) weakening the shank to determine the point of fracture under tension, and the portion (2') of the shank (2) between this incision (3) and the head (6) of the shank has a smaller cross section than the main part of the shank (2).

- 8 -

5. A snap-shank blind rivet according to any preceeding Claim, characterised by the fact that the head
(6) of the shank (2) and the adjacent end portion (1')
of the tubular body (1) are so shaped that upon compression of the tubular body (1) by a tension applied
to the shank (2) the end portion (1') of the tubular
body deforms to retain the head (6) and form therewith a substantially impermeable connection.

0168355

Fig. 1

Fig. 2

Fig. 3

Fig. 4

0168355

## Fig.5

## Fig.6

## Fig.7

0168355

Application number

EP 85 83 0136

**European Patent Office**

**EUROPEAN SEARCH REPORT**

## DOCUMENTS CONSIDERED TO BE RELEVANT

| Category | Citation of document with indication. where appropriate, of relevant passages | Relevant to claim | CLASSIFICATION OF THE APPLICATION (Int Cl 4) |
|---|---|---|---|
| X | US-A-2 324 142 (EKLUND) * Page 1, right-hand column, lines 11-59; page 2, left-hand column, lines 31-75; claims 1-5; figures 1-3,7,8 * | 1 | F 16 B 19/10 |
| A | | 2,5 | |
| | --- | | |
| X | DE-C- 637 797 (HUCK) * Page 3, lines 40-72; claims 1,5; figures 7,8 * | 1 | |
| A | | 5 | |
| | --- | | |
| A | GB-A-2 051 289 (KRAEMER) * Figures 1,3,4; page 1, lines 33-98; page 3, lines 98-121; claims 1,2 * | 1,4,5 | TECHNICAL FIELDS SEARCHED (Int. Cl 4) F 16 B |
| | --- | | |
| A | GB-A-2 120 741 (AVDEL LTD.) * Abstract; figures 4-8; page 1, lines 80-110; page 2, lines 18-55; claim 1 * | 1,4,5 | |
| | ----- | | |

The present search report has been drawn up for all claims

| Place of search THE HAGUE | Date of completion of the search 23-09-1985 | Examiner SCHAEFFLER C.A.A. |
|---|---|---|